# EUROPÄISCHE PATENTANMELDUNG

(11) **EP 1 500 465 A2**
(43) Veröffentlichungstag der Anmeldung: **26.01.2005**
(21) Anmeldenummer: 04017476.5
(22) Anmeldetag: 23.07.2004
(51) Int. Cl.: B23Q 39/02, B23Q 41/04, B23Q 41/06

(54) **Bearbeitungsmaschine mit zwei Bearbeitungseinheiten mit verschiedener Anzahl von Werkzeugspindeln**

(30) Priorität: 25.07.2003 DE 10334285
(71) Anmelder: Grob-Werke Burkhart Grob e.K., 87719 Mindelheim (DE)
(72) Erfinder: Lutz, Heinrich, 87742 Dirlewang (DE)
(74) Vertreter: Pfister, Stefan Helmut Ulrich

(57) **Zusammenfassung**

Die Erfindung betrifft eine Bearbeitungsmaschine für die spanabhebende Bearbeitung. Das Werkstück (3) wird von einer Spannvorrichtung gehalten. Auf der einen Seite des Werkstückes ist eine erste Bearbeitungseinheit (1) mit mindestens zwei Werkzeugspindeln (10) vorgesehen. Auf der anderen Seite des Werkstückes befindet sich eine zweite Bearbeitungseinheit (2) mit nur einer Werkzeugspindel (20). Das Werkstück befindet sich zwischen den beiden Bearbeitungseinheiten.

## Beschreibung

Die Erfindung betrifft eine Bearbeitungsmaschine für die insbesondere spanabhebende Bearbeitung mindestens eines Werkstückes. Dabei ist das Werkstück von einer Spannvorrichtung gehalten. Auf der einen Seite des Werkstückes ist eine erste Bearbeitungseinheit vorgesehen, die mehrere Werkzeugspindeln besitzt.

Im Stand der Technik sind Bearbeitungsmaschinen bekannt, bei welchen sogenannte Vielspindler eingesetzt werden, um Werkstücke zerspanend zu bearbeiten.

Der Einsatz von Vielspindlern ist deswegen interessant, da so eine Vielzahl von bereits einsatzbereiten Werkzeugen am Werkstück vorgehalten werden. Es sind zum Beispiel Anordnungen mit 4 x 4 Werkzeugspindeln bekannt, wodurch eine verhältnismäßig komplexe Bearbeitung möglich ist. In einer entsprechenden Bearbeitungsmaschine können dann ohne Werkzeugwechsel mehrere unterschiedliche Bearbeitungen mit unterschiedlichen Werkzeugen erfolgen. Dies führt zu einer entsprechenden Leistungssteigerung.

Der Stand der Technik kennt beispielsweise auch Bearbeitungsmaschinen, die auf beiden Seiten des Werkstücks jeweils eine Bearbeitungseinheit mit nur jeweils einer Spindel für eine Bearbeitung aufweisen.

Aus dem Stand der Technik sind weiterhin Bearbeitungsmaschinen mit zwei Bearbeitungseiheiten bekannt, die auf beiden Seiten des Werkstücks jeweils zwei Bearbeitungseinheiten mit mehreren und jeweils der gleichen Anzahl von Spindeln vorsehen. Der Aufwand ist ebenso hoch wie bei den zuvor beschriebenen Vielspindlern.

Die Erfindung hat es sich zur Aufgabe gemacht, die Effizienz von bekannten Bearbeitungsmaschinen möglichst kostengünstig zu steigern.

Zur Lösung dieser Aufgabe geht die Erfindung aus von einer Bearbeitungsmaschine, wie eingangs beschrieben, und schlägt vor, daß auf der anderen Seite des Werkstückes eine zweite Bearbeitungseinheit mit nur einer Werkzeugspindel angeordnet ist und das Werkstück sich zwischen den beiden Bearbeitungseinheiten befindet.

Der erfindungsgemäße Vorschlag erweitert mit verhältnismäßig geringem Aufwand den Einsatzbereich der erfindungsgemäßen Bearbeitungsmaschinen erheblich. Es werden zwei gegenüberstehende, also in Opposition zueinander stehende Bearbeitungseinheiten vorgeschlagen, die eine unterschiedliche Anzahl von Werkzeugspindeln tragen. Die erste Bearbeitungseinheit ist mehrspindelig aufgebaut. Sie besitzt mindestens zwei Werkzeugspindeln. Günstigerweise werden eine Vielzahl von Werkzeugspindeln vorgehalten, die mit jeweils unterschiedlichen oder redundant ausgestatteten Werkzeugen (z.B. für kurzfristigen Ersatz bei Werkzeugbruch) bestückt sind. Dabei ist die Orientierung des Werkstückes in der Bearbeitungsmaschine geschickterweise so, daß die mehrspindlige Bearbeitungseinheit an der Werkstückseite ansetzt, wo sowieso mehr Bearbeitungen mit unterschiedlichen Werkzeugen zu erfolgen haben.

Sind an dem Werkstück auch rückseitig Bearbeitungen auszuführen, so ist es oftmals ausreichend, hier eine Bearbeitungseinheit mit nur einer Werkzeugspindel anzuordnen. Geschickterweise besitzt diese Bearbeitungseinheit dann eine unabhängige Beweglichkeit, um die zweite Bearbeitungseinheit an der gewünschten Stelle zu positionieren und eine Bearbeitung durch die zweite Bearbeitungseinheit ausführen zu lassen, während eine oder mehrere Werkzeugspindeln der ersten Bearbeitungseinheit in Bearbeitung stehen. Die erfindungsgemäße Anordnung ist grundsätzlich dafür geeignet, daß gleichzeitig mehrere Spindeln, gegebenenfalls auf unterschiedlichen Seiten des Werkstückes, in Benutzung sind. Die Zerspanleistung steigt entsprechend. Da kein Umsetzen des Werkstückes notwendig ist, wird Zeit gespart, was für eine hohe Effizienz günstig ist.

Die Anordnung der Vielspindler hat aber auch noch den Vorteil, daß, soweit ähnliche oder identische Bohrungen an unterschiedlichen Stellen in einem gewissen Rastermaß an dem Werkstück einzuarbeiten sind (zum Beispiel Ventilführungen eines Zylinderkopfes), der Abstand der Werkzeugspindeln der Vielspindelbearbeitungseinheit dem Rastermaß auf dem Werkstück entspricht. Auch hierzu kann gleichzeitig auf der Rückseite eine Bearbeitung durch die verhältnismäßig einfach gestaltete, zweite Bearbeitungseinheit mit nur einer Werkzeugspindel erfolgen.

Gegenüber den aus dem Stand der Technik bekannten Lösungen bietet das erfindungsgemäße Konzept jetzt die Möglichkeiten, auf einer Seite des zu bearbeitenden Werkstückes eine Bearbeitungseinheit mit mehreren Spindeln vorzusehen, wobei in den Spindeln unterschiedliche Werkzeuge für eine Bearbeitung oder aber für einen möglichen Wechsel bei Verschleißausfall vorgehalten werden können, und auf der anderen Seite nur eine Bearbeitungseinheit mit einer Spindel vorzusehen. Diese Bearbeitungseinheit wird auf der Seite des Werkstücks positioniert, auf der, wie bereits erwähnt, die geringere Anzahl von Bearbeitungsschritten durchgeführt werden muß. Dies führt zu einer Einsparung des Aufwandes, weil nämlich eine Bearbeitungseinheit wesentlich einfacher ausgeführt werden kann als die Vielspindel-Bearbeitungseinheit. Damit wird ein erheblicher Aufwand für die gesamte Bearbeitungsmaschine eingespart, was zu einer Kostenreduzierung führt.

Durch die erfindungsgemäße Lösung wird es jetzt möglich das Werkstück gleichzeitig auf beiden Seiten, nämlich mit der ersten Bearbeitungseinheit mit einer Vielzahl von Spindeln zu bearbeiten und gleichzeitig mit der zweiten Bearbeitungseinheit mit nur einer Spindel auf der anderen Seite des Werkstückes die Bearbeitungsschritte durchzuführen. Bei den aus dem Stand der Technik bekannten Lösungen ist es bisher möglich nur mit jeweils einer Spindel das Werkstück von beiden Seiten zu bearbeiten beziehungsweise von beiden Seiten gleichzeitig mit mehreren Spindeln die Bearbeitung vorzunehmen. Der Aufwand für diese doppelte, quasi symmetrische Ausgestaltung ist hoch und engt die Bearbeitungsmöglichkeiten ein. Eine solche Anordnung nach dem Stand der Technik ist dann günstig, wenn für die Werkstücke beidseitig eine Mehrfachbearbeitung benötigt wird. Ein Werkzeugwechsel ist bei den Vielspindlern automatisch eigentlich nicht möglich, was weiterhin die Bearbeitungsmöglichkeiten einschränkt und bei einem Werkzeugbruch/Verschleiß unweigerlich zu Stillstandzeiten führt, da keine redundanten Werkzeuge für die platzgebundene Mehrfachbearbeitung vorgehalten werden können. Dies wird jetzt durch den erfindungsgemäßen Vorschlag vermieden, indem tatsächlich auf der Seite des Werkstückes, an der die Bearbeitungseinheit mit mehreren Spindeln erfolgt, dies in der bekannten, effizienten Weise durchgeführt werden kann, während auf der anderen Seite des Werkstückes, an dem eben nicht so viele Bearbeitungsschritte notwendig sind, die Bearbeitung mit nur einer Spindel erfolgt.

Die erfindungsgemäße Anordnung ist flexibler und auch in iherer Herstellung günstiger.

Eine Weiterbildung der zuvor beschriebenen Lösungen sieht demnach vor, daß die sich in Opposition gegenüberliegenden Bearbeitungseinheiten eine unterschiedliche Anzahl von Spindeln aufweisen. Dabei ist es bevorzugt, daß die erste Bearbeitungseinheit immer eine größere Anzahl von Spindeln aufweist als die zweite Bearbeitungseinheit, die ja auf der Seite angreifen soll, an der weniger Bearbeitungen durchzuführen sind. Die Spindeln der ersten Bearbeitungseinheit können dabei sowohl übereinander oder aber auch nebeneinander angeordnet sein. Selbstverständlich ist auch eine Anordnung vorgesehen, bei der mehrere Spindeln übereinander und nebeneinander angeordnet sind.

Die Spindelachsen der Spindeln der beiden Bearbeitungseinheiten sind bevorzugt parallel angeordnet und die Spindelköpfe sind zueinander zugewandt.

Bevorzugt ist es auch, daß entsprechend einer günstigen Weiterbildung der Erfindung das Werkstück gleichzeitig von beiden insbesondere einander gegenüberstehenden Bearbeitungseinheiten bearbeitbar ist. Durch die gleichzeitige beziehungsweise simultane Bearbeitung wird die Gesamtbearbeitungsdauer reduziert, beziehungsweise die Effizienz beziehungsweise Zerspanleistung erhöht.

Eine weitere Variante der Erfindung sieht vor, daß die zweite Bearbeitungseinheit das Werkstück mit einer Anzahl X von Spindeln und die erste Bearbeitungseinheit das Werkstück mit einer Anzahl von Spindeln bearbeitet, die größer als X ist.

In einer Weiterbildung der Erfindung ist vorgesehen, daß für die zweite Bearbeitungseinheit ein Werkzeugmagazin vorgesehen ist. Der Aufwand für ein Werkzeugmagazin ist verhältnismäßig gering. Bei entsprechender Optimierung der Arbeitsabläufe erfolgt der Werkzeugwechsel in den Zeiten, wo entweder das Werkstück gewechselt wird oder eine weitere Bearbeitung auf der Seite des Werkstückes nicht notwendig ist, aber eine Bearbeitung auf der vielspindligen Seite noch andauert. Durch den Einsatz des Werkzeugmagazines wird natürlich die Variabilität der Bearbeitungsmaschine, gerade wenn es die Bearbeitung auf der Seite der zweiten Bearbeitungseinheit betrifft, erheblich gesteigert. Während bei den aus dem Stand der Technik bekannten Lösungen mit jeweils einer Spindel auf einer zu bearbeitenden Werkstückseite für jede Bearbeitungseinheit ein Werkzeugmagazin vorgehalten werden muß, ist dies nach der erfindungsgemäßen Lösung nicht mehr notwendig. Um die Variabilität der gesamten Anlage zu erhöhen, reicht es aus, die erste Bearbeitungseinheit mit einer Vielspindelkonzeption zu versehen und die zweite Bearbeitungseinheit mit einer Einspindelkonzeption und diese mit einem Werkzeugmagazin zu kombinieren, um eine unterschiedliche Anzahl von Bearbeitungen durchführen zu können. Dieser Aufwand ist wesentlich geringer als für zwei Einspindeleinheiten jeweils ein Werkzeugmagazin vorzuhalten. Auch wird die insgesamt zur Bearbeitung zur Verfügung stehende Zeit erhöht, da Zeiten für den Werkzeugwechsel eingespart werden.

In einer bevorzugten Variante der Erfindung ist vorgesehen, daß das Werkzeugmagazin mindestens einen Antrieb, insbesondere einen Vertikalantrieb aufweist, durch welchen das Werkzeugmagazin aus einer Warteposition in eine Wechselposition an der Werkzeugspindel heranführbar ist. Da das Werkzeugmagazin nur in gewissen Zeitintervallen benötigt wird, ist es günstig, das Werkzeugmagazin in einer Warteposition vorzuhalten, in welcher das Werkzeugmagazin die Bearbeitung des Werkstückes nicht behindert. Günstigerweise wird dabei das Werkzeugmagazin über der Werkzeugspindel der zweiten Bearbeitungseinheit angeordnet und mit einem Vertikalschlitten ausgestattet und so von der Warteposition in die Wechselposition verschoben. Es kann aber auch von Vorteil sein, daß das Werkzeugmagazin entlang zweier Achsen verschiebbar ist.

Gemäß der Erfindung kommt es darauf an, daß für den Wechselvorgang das Werkzeugmagazin relativ zu der Arbeitsspindel bewegt wird. Diese Relativbewegung kann aber auch durch einen Bewegungsantrieb der zweiten Bearbeitungseinheit geleistet werden, durch welche die Werkzeugspindel in den Bereich des Werkzeugmagazins verbringbar ist. Üblicherweise besitzt die Werkzeugspindel einen Vorschub in Richtung der Spindelachse. Der Bewegungsantrieb steht hierzu rechtwinklig und erlaubt einen seitlichen Versatz der Werkzeugspindel, um zu dem Werkzeugmagazin zu gelangen, welches zum Beispiel ortsfest außerhalb des Wirkbereiches der Werkzeugspindeln vorgehalten ist. Es ist aber auch eine Kombination derart möglich, daß das Werkzeugmagazin von einer Warteposition in eine Wechselposition gefahren wird und der Bewegungsantrieb die Bearbeitungseinheit ebenfalls von der Bearbeitungsstellung in die Werkzeugwechselstellung bringt.

In einer weiteren Variante der Erfindung ist vorgesehen, daß das Werkzeugmagazin sowohl einen Vertikal- wie auch einen Horizontalantrieb aufweist. Das Werkzeugmagazin kann dabei den bevorzugten Bewegungsrichtungen des Werkstückes in der Bearbeitungsmaschine (X-, Y- oder Z-Achse) folgen oder winklig hierzu angeordnet sein.

Es ist hierbei günstig, daß der Bewegungsantrieb auch während der Bearbeitung des Werkstückes durch die zweite Bearbeitungseinheit eingesetzt wird. Der Bewegungsantrieb dient dabei einer weiteren Funktion, nämlich zur Positionierung und/oder Bearbeitung des Werkstückes durch die zweite Bearbeitungseinheit bzw. die darauf angeordnete Werkzeugspindel. Diese zusätzliche Achse wird gegebenenfalls sowieso benötigt, falls an variablen Stellen auf der der ersten Bearbeitungseinheit abgewandten Seite Bearbeitungen auszuführen sein sollen.

In einer bevorzugten Anordnung der Erfindung ist vorgesehen, daß an der ersten Bearbeitungseinheit mehrere Spindeln übereinander und/oder nebeneinander angeordnet sind. Es sind zum Beispiel Anordnungen von einer Reihe mit zwei Spindeln bis zu sechs Reihen mit sechs Spindeln oder noch mehr Spindeln in noch mehr Reihen vorstellbar. Jedwede Kombination der natürlichen Zahlen von Reihen und Spalten der Spindeln ist hierbei denkbar. Oftmals werden dabei Anordnungen gewählt, bei welchen 3 x 3, 3 x 4, 4 x 3, 4 x 4 oder 4 x 5 Spindeln auf der ersten Bearbeitungseinheit angeordnet sind. Dabei können mehrere Werkzeugspindeln mit dem gleichen Werkzeug ausgestattet sein, um zum Beispiel zum einen parallel gleichartige Bohrungen in einem gewissen Rastermaß auszuführen oder aber Ersatzwerkzeuge redundant vorzuhalten, um bei einem vorzeitigen Werkzeugverschleiß auf das Ersatzwerkzeug umschalten zu können.

Es ist günstig, daß die Spannvorrichtung zumindest entlang einer Richtung für eine Positionierung des Werkstückes und/oder während der Bearbeitung des Werkstückes beweglich, insbesondere vertikal verfahrbar ausgebildet ist. Da die Realisierung von mehreren Bewegungsachsen, die orthogonal zueinander angeordnet sind, oftmals nur mit sehr aufwendigen Kreuzschlittenführungen oder dergleichen möglich ist, wird durch die Aufteilung der Achsen einerseits auf die Bewegung des Werkstückes und andererseits auf die Bewegung der Werkzeugspindel ein erheblicher Vorteil erreicht. Der jeweilige konstruktive Aufwand zur Realisierung der bewegten Achsen sinkt. Günstigerweise wird dabei die Spannvorrichtung zumindest entlang einer Richtung beweglich ausgebildet, wobei für die Positionierung der Spindel bezüglich des Werkstückes nur noch zwei Freiheitsgrade verbleiben, die einfacher und mit geringem Aufwand zu realisieren sind.

In einer weiteren Ausgestaltung der Erfindung ist vorgesehen, daß die Spannvorrichtung das Werkstück zu drehen vermag. Das Werkstück oder mehrere auf der Spannvorrichtung gespannten Werkstücke sind dabei entweder um eine horizontale (B-)Achse drehbar oder aber um eine vertikal verlaufende A-Achse. Die Bearbeitungsmöglichkeiten steigen durch eine solche Ausgestaltung erheblich.

In einer weiteren erfindungsgemäßen Variante ist vorgesehen, daß die Bearbeitungsmaschine mehrere Spannvorrichtungen aufweist. Diese können gemeinsam oder jeweils einzeln verfahrbar angeordnet sein. Dabei ist es günstig, daß ein Ständer zur Aufnahme der Spannvorrichtung bzw. der Spannvorrichtungen vorgesehen ist. Der Ständer erlaubt eine stabile Ausgestaltung und auch Führung der beweglich angeordneten Spannvorrichtung.

In diesem Zusammenhang ist es von Vorteil, daß der Ständer auch das Werkzeugmagazin trägt. Da günstigerweise der Ständer vertikal über dem Werkstück und daher auch seitlich über der Werkzeugspindel angeordnet ist, ist dieser erfindungsgemäße Vorschlag gut geeignet, konstruktiven Aufwand einzusparen, da an dem bereits bestehenden Ständer einfach das Werkzeugmagazin in relativer Nähe zur Spindel mit angeschlossen wird.

Im Sinne der Erfindung ist es ebenfalls möglich, daß die zweite Bearbeitungseinheit nicht nur eine erste Werkzeugspindel besitzt, sondern auch noch weitere Werkzeugspindeln trägt. Auch dies steht im Einklang mit der erfinderischen Aufgabe, da verhältnismäßig einfach ausgestaltete, weitere Werkzeugspindeln vorgesehen werden können. Dabei ist es selbstverständlich möglich, daß je weiterer Werkzeugspindel ein eigenes Werkzeugmagazin vorgesehen ist und/oder für mehrere bzw. alle Werkzeugspindeln ein gemeinsames Werkzeugmagazin vorgehalten wird. Dies ist letztendlich eine Entscheidung im Hinblick auf den zur Verfügung stehenden Platz sowie die gewünschte Flexibilität bzw. Bearbeitungsmöglichkeiten der erfindungsgemäßen Bearbeitungsmaschine.

Um die Variabilität der Erfindung weiterhin zu steigern, ist in einer weiteren erfindungsgemäßen Variante vorgesehen, daß auch für die erste Bearbeitungseinheit ein Werkzeugmagazin vorgesehen ist. Die Erfindung ist nicht nur auf eine Ausgestaltung beschränkt, bei welcher auf der Bearbeitungseinheit mit den vielen Spindeln kein Werkzeugmagazin vorzusehen ist. Ein solches Werkzeugmagazin kann selbstverständlich auch bei einer Vielspindelbearbeitungseinheit von Vorteil sein, um zum Beispiel rechtzeitig schadhafte Werkzeuge auszutauschen und/oder den Einsatzbereich der erfindungsgemäßen Bearbeitungsmaschine weiterhin zu steigern. Dabei ist es möglich, daß das Werkzeugmagazin entweder auf der Bearbeitungseinheit mitfährt oder gegebenenfalls auch an dem Ständer, der auch schon die Spannvorrichtung trägt und führt, das Werkzeugmagazin angeordnet ist.

In der Zeichnung ist die Erfindung schematisch dargestellt. Es zeigen:
- Fig. 1: In einer Draufsicht eine erfindungsgemäße Bearbeitungsmaschine,
- Fig. 2,3: jeweils in einer Seitenansicht weitere Varianten der erfindungsgemäßen Bearbeitungsmaschine.

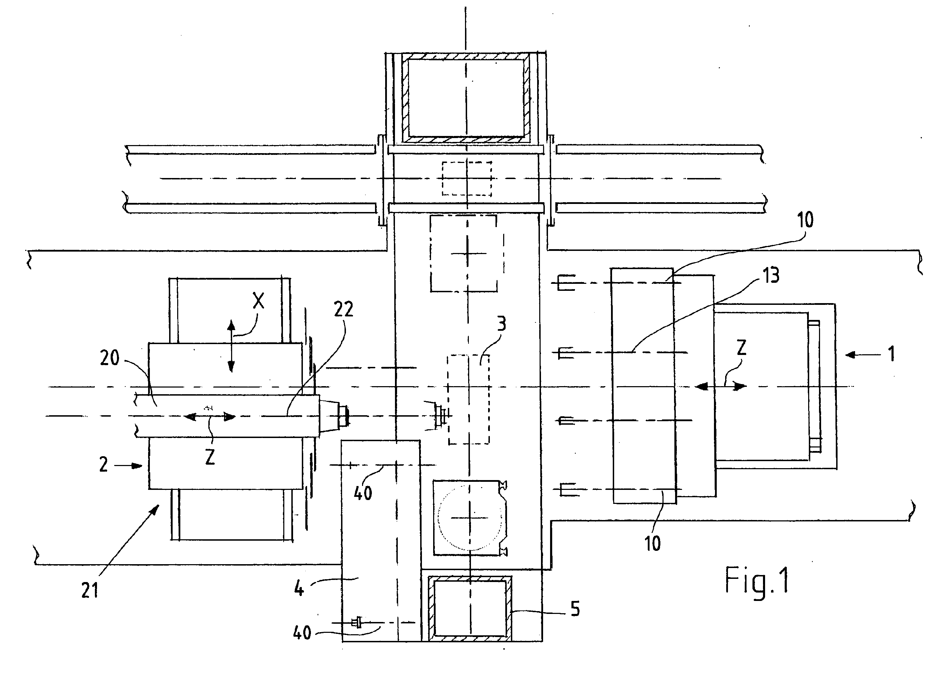

In Fig. 1 ist die erfindungsgemäße Bearbeitungsmaschine von oben gezeigt. Die Bearbeitungsmaschine dient insbesondere für die spanabhebende Bearbeitung, hierauf ist die Erfindung aber nicht festgelegt. Die Bearbeitungsmaschine kann als unabhängiges Bearbeitungszentrum, also zum Beispiel als "stand alone"-Maschine ausgebildet sein. Es ist aber auch möglich, die erfindungsgemäße Bearbeitungsmaschine zum Beispiel mit anderen Bearbeitungsmaschinen, gleichen oder anderen Types, zu verketten und in einen komplexen Bearbeitungsprozeß einzubinden. Dies kann zum Beispiel im Rahmen einer Transferstraße bei einer ansonsten ausgesalteten verketteten Gruppe von Bearbeitungsmaschinen oder Zentren erfolgen. Die Erfindung legt sich diesbezüglich nicht fest.

Das Werkstück 3 befindet sich bei der hier dargestellten Ausgestaltung zwischen der ersten, auf der rechten Seite angeordneten Bearbeitungseinheit 1 und der zweiten Bearbeitungseinheit 2. Die erste Bearbeitungseinheit 1 ist ein so genannter Vielspindler, das bedeutet, auf diese Bearbeitungseinheit 1 sind eine Vielzahl von Spindeln 10 vorgesehen. Die Spindeln 10 sind zur Erhöhung der Übersichtlichkeit nur durch ihre Rotationsachse und einem frontseitigen Werkzeugende angedeutet. Es ist dabei klar, daß hierunter eine Werkzeugspindel zu verstehen ist.

Die Bearbeitungseinheit 1 bzw. die Spindeln 10 sind entlang der Z-Richtung beweglich. Die Z-Richtung ist parallel zur Spindelachse 13. Hierzu weist die Bearbeitungseinheit 1 einen Schlitten 11 auf, der auf einer Führung 12 gelagert ist und durch einen Antrieb (der nicht gezeigt ist) in Z-Richtung bewegbar ist.

Auf der dem Werkstück 3 gegenüberliegenden Seite des Werkstückes befindet sich die zweite Bearbeitungseinheit 2. Diese besteht in diesem erfindungsgemäßen Konzept aus nur einer Spindel 20. Die Spindelachsen 13, 22 der Spindeln 10, 20 sind parallel angeordnet, die Spindelköpfe sind einander zugewandt, wodurch sich die Anordnung eines Werkstückes 3 zwischen den beiden Bearbeitungseinheiten 1,2 ergibt.

Die Spindel 20 befindet sich z.B. auf einer Kreuzschlittenanordnung, die eine Bewegung entlang zweier rechtwinkliger Achsen X und Z erlaubt. Natürlich sind entsprechende Antriebe sowohl in die X-Richtung (dargestellt durch den Doppelpfeil) und in Richtung der Z-Richtung (ebenfalls durch einen Doppelpfeil angedeutet) vorgesehen. In der nicht durchgezogenen Ausgestaltung ist ange-deutet, wie weit die Werkzeugspindel 20 vorbewegbar ist, damit diese auf das Werkstück 3 einwirken kann.

Die Vielzahl von Spindeln 10 an der ersten Bearbeitungseinheit 1 erlauben eine hohe Variabilität bei dem Vorhalten unterschiedlichster Werkzeuge. Da auf der linken Seite an der Bearbeitungseinheit 2 nur eine Werkzeugspindel 20 vorgesehen ist, wird hier geschickterweise ein Werkzeugmagazin 4 vorgehalten, welches eine Vielzahl von einwechselbaren Werkzeugen 40 vorhält. Das Werkzeugmagazin 4 befindet sich dabei an einem Ständer 5, der auch die Spannvorrichtung 6 führt bzw. hält, welches das Werkstück 3 aufnimmt.

Durch die Kreuzschlittenbewegung in X-Richtung der zweiten Spindel 20 ist es möglich, die Spindel 20 in den Bereich des Werkzeugmagazines 4 zu verfahren, um den Werkzeugwelchsel durchzuführen. Dabei ist entweder alternativ vorgesehen, daß das Werkzeugmagazin 4 selber auch einen Antrieb aufweist, um das Werkzeugmagazin von einer Warteposition in eine Wechselposition zu bringen oder aber das Werkzeugmagazin 4 liegt so weit entfernt, daß bei der üblichen Bearbeitung das Werkzeugmagazin 4 nicht behindert.

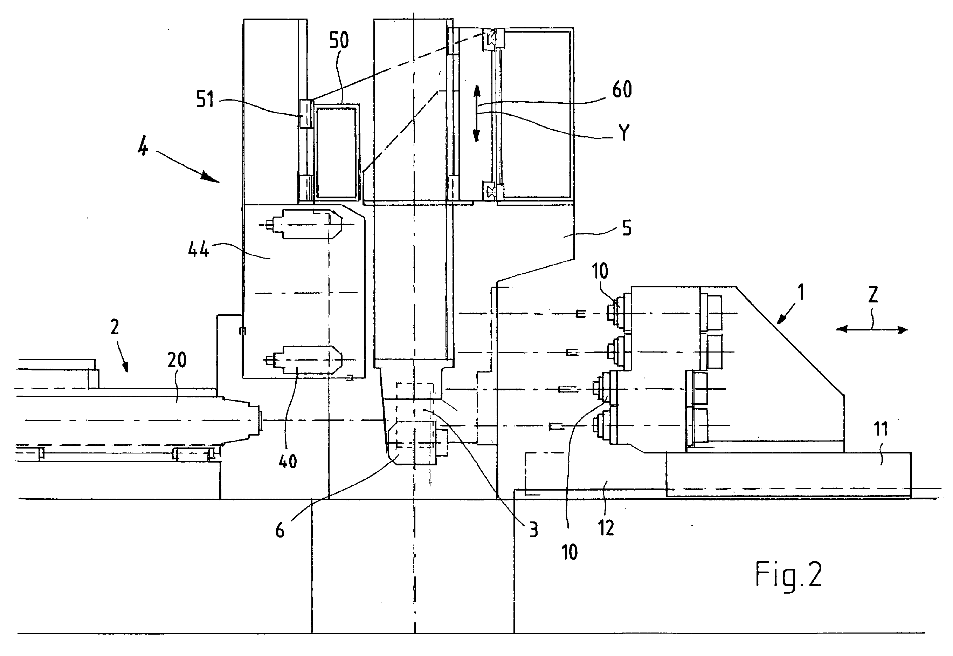

In Fig. 2 ist eine Seitenansicht gezeigt. In der Zusammenschau von Fig. 1 und Fig. 2 ergibt sich für die erste Bearbeitungseinheit 1, daß insgesamt vier Reihen mit je vier Spindeln 10 vorgesehen sind. Es können aber auch beliebig andere Anordnungen mehrerer Spindeln in der ersten Bearbeitungseinheit 1 vorgesehen sein. Die oberen Werkzeugspindeln 10 in der Bearbeitungseinheit sind etwas gegenüber den unteren Bearbeitungsspindeln 10 zurückgesetzt, um nicht mit einer Spannvorrichtung 6 zu kollidieren. Soweit eine Bearbeitung mit diesen Werkzeugspindeln gewünscht ist, wird einfach die Spannvorrichtung 6 nach oben bewegt, bis das Werkstück die jeweilige gewünschte Lage bezüglich der Bearbeitungsspindel hat. Hierzu dient ein Antrieb an der Spannvorrichtung 6, welche zu einer Vertikalbewegung 60 (dargestellt durch den Doppelpfeil) führt. Dies betrifft gleichzeitig auch die Y-Achse für die Bearbeitung. Die Spindeln 10 werden durch den gemeinsamen Spindelschlitten 11 gegen das Werkstück 3 angestellt und weggezogen. Dies kann aber auch durch jeweils einzelne Pinolen für die Werkzeugspindeln 10 realisiert werden. Eine solche Pinole mag auch bei der zweiten Bearbeitungseinheit 2 verbaut sein oder es wird auch hier eine Kreuzschlittenanordnung in der Richtung vorgesehen, daß eine Bewegung in Richtung der Spindeachse 22 (Z-Achse) möglich ist.

Das in Fig. 2 ausgeführte Werkzeugmagazin 4 ist als Kettenmagazin 44 realisiert. Das Kettenmagazin 44 wird von dem Ständer 5 gehalten, der auch die Spannvorrichtung 6 trägt. Das Werkzeugmagazin 4 besitzt einen eigenen Antrieb, um das Werkzeugmagazin aus einer Warteposition in eine Werkzeugwechselposition zu bringen. Dies ist in diesem Fall ein Vertikalantrieb, der zwischen dem Werkzeugmagazin 4 und dem Ständer 5 angeordnet ist. Hierzu besitzt der Ständer 5 einen horizontal angeordneten Tragbalken 50, an dem das Werkzeugmagazin 4 vertikal bewegbar angeordnet ist. Der Tragbalken 50 weißt dabei Führungsschuhe 51 auf, die mit einer darin beweglichen Führung des Werkzeugmagazins 4 zusammenwirken.

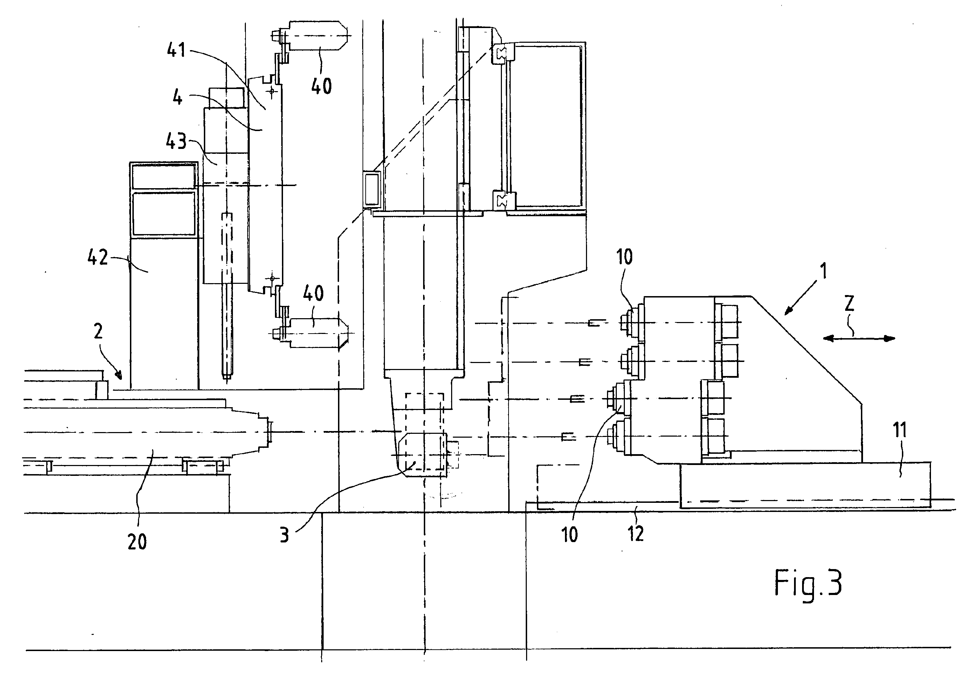

In der Variante nach Fig. 3 ist ein Scheibenmagazin 41 vorgesehen, welches die Werkzeuge 40 trägt. Auch dieses Scheibenmagazin ist vertikal bewegbar, hierfür dient der Vertikalantrieb 43. Das Scheibenmagazin 41 ist hierbei an einem separaten Ständer 42 vorgesehen und von dem Ständer 5, welcher die Spannvorrichtung 6 hält, getrennt. Eine solche Anordnung ist zum Beispiel dann von Vorteil, wenn im Arbeitsraum verhältnismäßig viel Platz benötigt wird und die Anordnung des Werkzeugmagazines auf dem Ständer 5 eventuell die Bearbeitung behindern könnte.

Für einen Werkzeugwechsel kann dabei sowohl die Werkzeugspindel 20 wie auch das Werkzeugmagazin 4 jeweils aus einer Bearbeitungs- oder Warteposition in eine Wechselposition oder - stellung verfahren werden. Es ist vorgesehen, daß die Spannvorrichtung 6 eine Mehrzahl von Werkstücken 3 trägt. Dies ist zum Beispiel dann von Vorteil, wenn die vielen Spindeln 10 den der ersten Bearbeitungseinheit 1 in einem Rastermaß angeordnet sind, welche dem Abstand der verschiedenen Werkstücke entspricht. So können in einem Bearbeitungsschritt eine Vielzahl von gleichartigen Bohrungen an unterschiedlichen Werkstücken eingebracht werden.

Dabei ist vorgesehen, daß das eine Werkstück oder auch mehrere Werkstücke in der Spannvorrichtung 6 um eine horizontale Drehachse drehbar ist oder sind, wie auch um eine zum Beispiel senkrecht zur Blattebene von Fig. 3 orientierte Drehachse schwenk- oder neigbar ist. Dadurch wird eine Bearbeitung von fast allen Seiten des Werkstückes in der erfindungsgemäßen Bearbeitungsmaschine erreicht.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Bearbeitungsmaschine für die insbesondere spanabhebende Bearbeitung mindestens eines Werkstückes, wobei das Werkstück (3) von einer Spannvorrichtung (6) gehalten ist und auf der einen Seite des Werkstückes (3) eine erste Bearbeitungseinheit (1) mit mindestens zwei Werkzeugspindeln (10) angeordnet ist und auf der anderen Seite des Werkstückes (3) eine zweite Bearbeitungseinheit (2) mit nur einer Werkzeugspindel (20) angeordnet ist und das Werkstück (3) sich zwischen den beiden Bearbeitungseinheiten (1, 2) befindet.

2. Bearbeitungsmaschine nach Anspruch 1, **dadurch gekennzeichnet, dass** die sich in Opposition gegenüberliegenden Bearbeitungseinheiten (1, 2) eine unterschiedliche Anzahl von Spindeln (10, 20) aufweisen.

3. Bearbeitungsmaschine nach einem oder beiden der vorhergehenden Ansprüche, **dadurch gekennzeichnet, dass** die Anzahl der Spindeln (10) der ersten Bearbeitungseinheit (1) größer ist als die Anzahl der Spindeln (20) der zweiten Bearbeitungseinheit (2) und/oder an der ersten Bearbeitungseinheit (1) mehrere Spindeln (10) übereinander und/oder nebeneinander angeordnet sind.

4. Bearbeitungsmaschine nach einem oder mehreren der vorhergehenden Ansprüche, **dadurch gekennzeichnet, dass** die Spindelachsen (13, 22) der Spindeln (10, 20) parallel angeordnet und die Spindelköpfe zueinander zugewandt sind.

5. Bearbeitungsmaschine nach einem oder mehreren der vorhergehenden Ansprüche, **dadurch gekennzeichnet, dass** das Werkstück (3) gleichzeitig von beiden Bearbeitungseinheiten (1, 2) bearbeitbar ist.

6. Bearbeitungsmaschine nach einem oder mehreren der vorhergehenden Ansprüche, **dadurch gekennzeichnet, dass** die zweite Bearbeitungseinheit (2) das Werkstück (3) mit einer Anzahl x von Spindeln (20) und die erste Bearbeitungseinheit (1) das Werkstück (3) mit einer Anzahl von Spindeln (10) größer x bearbeitet.

7. Bearbeitungsmaschine nach einem oder mehreren der vorhergehenden Ansprüche, **dadurch gekennzeichnet, dass** für die zweite Bearbeitungseinheit (2 ) ein Werkzeugmagazin (4) vorgesehen ist.

8. Bearbeitungsmaschine nach einem oder beiden der vorhergehenden Ansprüche, **dadurch gekennzeichnet, dass** das Werkzeugmagazin (4) als Scheibenmagazin (41) oder als Kettenmagazin (44) ausgebildet ist und/oder das Werkzeugmagazin (4) mindestens einen Antrieb, insbesondere einen Vertikalantrieb aufweist, durch welchen das Werkzeugmagazin (4) aus einer Warteposition in eine Wechselposition an der Werkzeugspindel (20) heranführbar ist.

9. Bearbeitungsmaschine nach einem oder mehreren der vorhergehenden Ansprüche, **dadurch gekennzeichnet, dass** die zweite Bearbeitungseinheit (2) einen Bewegungsantrieb aufweist, durch welchen die Werkzeugspindel (20) in den Bereich des Werkzeugmagazines (4) bringbar ist und/oder der Bewegungsantrieb auch während der Bearbeitung des Werkstückes (3) durch die zweite Bearbeitungseinheit (2) eingesetzt wird.

10. Bearbeitungsmaschine nach einem oder mehreren der vorhergehenden Ansprüche, **dadurch gekennzeichnet, dass** die Spannvorrichtung (6) zumindest entlang einer Richtung (Y) für eine Positionierung des Werkstückes (3) und/oder während der Bearbeitung des Werkstückes (3) beweglich, insbesondere vertikal verfahrbar ausgebildet ist und/oder die Spannvorrichtung (6) das Werkstück (3) zu drehen vermag und/oder die Spannvorrichtung (6) eine Mehrzahl von Werkstücken (3) trägt und/oder die Bearbeitungsmaschine mehrere Spannvorrichtungen (6) aufweist.

11. Bearbeitungsmaschine nach einem oder mehreren der vorhergehenden Ansprüche, **dadurch gekennzeichnet, dass** ein Ständer (5) zur Aufnahme der Spannvorrichtung (6) vorgesehen ist und/oder der Ständer (5) auch das Werkzeugmagazin (4) trägt.

12. Bearbeitungsmaschine nach einem oder mehreren der vorhergehenden Ansprüche, **dadurch gekennzeichnet, dass** für das Werkzeugmagazin (4) ein von dem Ständer (5) der Spannvorrichtung getrennter Ständer (42) vorgesehen ist.

13. Bearbeitungsmaschine nach einem oder mehreren der vorhergehenden Ansprüche, **dadurch gekennzeichnet, dass** die zweite Bearbeitungseinheit (2) neben einer ersten Werkzeugspindel (20) auch noch weitere Werkzeugspindeln trägt.

14. Bearbeitungsmaschine nach einem oder mehreren der vorhergehenden Ansprüche, **dadurch gekennzeichnet, dass** auch für die erste Bearbeitungseinheit (1) ein Werkzeugmagazin vorgesehen ist.
